# FASCICULE DE BREVET EUROPEEN

(11) **EP 1 463 643 B1**
(45) Date de publication et mention de la délivrance du brevet: **06.12.2006**
(21) Numéro de dépôt: 02796724.9
(22) Date de dépôt: 23.12.2002
(51) Int. Cl.: B60C 15/00, B60C 9/02

(54) **PNEUMATIQUE AVEC STRUCTURE DE RENFORT FORMANT DES BOUCLES INTERNES ET EXTERNES**
REIFEN MIT EINER INNEREN UND ÄUSSEREN SCHLAUFEN BILDENDEN VERSTÄRKUNGSSTRUKTUR
TYRE WITH REINFORCING STRUCTURE FORMING INNER AND OUTER LOOPS

(30) Priorité: 28.12.2001 FR 0117135
(43) Date de publication de la demande: 06.10.2004
(73) Titulaire: Société de Technologie Michelin, 63000 Clermont-Ferrand (FR); MICHELIN Recherche et Technique S.A., 1763 Granges-Paccot (CH)
(72) Inventeur: PANNING, Nathan, Simpsonville, SC 29681 (US)
(74) Mandataire: Dequire, Philippe Jean-Marie Denis
(86) Numéro de dépôt international: PCT/EP2002/014722
(87) Numéro de publication internationale: WO 2003/055701

(56) Documents cités:
- EP-A- 0 549 869
- US-A- 1 420 611
- US-A- 3 815 652
- US-A- 4 830 781
- US-A- 5 045 376

## Description

La présente invention concerne les pneumatiques. Plus particulièrement, elle concerne la disposition et la configuration de la structure de renforcement dans les flancs, dans les bourrelets et dans la zone du sommet du pneumatique; elle concerne également l'ancrage des fils de carcasse dans le bourrelet et les renforcements de différentes portions du bourrelet ou du flanc.

Le renforcement des pneumatiques est à l'heure actuelle constitué par une ou plusieurs nappes désignées classiquement « nappes carcasses », «nappes sommet », etc. Cette façon de désigner les renforts provient du procédé de fabrication, consistant à réaliser une série de produits semi-finis en forme de nappes, pourvues de renforts filaires souvent longitudinaux, qui sont par la suite assemblées afin de confectionner un pneumatique.

Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Ce même procédé classique implique l'utilisation d'une tringle, utilisée pour réaliser l'ancrage ou le maintien de la nappe carcasse dans la zone basse du flanc. Ainsi, classiquement, on effectue un retournement d'une portion de nappe autour d'une tringle disposée dans le bourrelet du pneumatique. On crée de la sorte un ancrage de la nappe carcasse dans le bourrelet.

La généralisation dans l'industrie de ce procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Cependant, il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les fils des différentes structures de renfort sont appliqués directement sur les couches adjacentes de mélanges caoutchoutiques, le tout étant appliqué par couches successives sur un noyau toroïdal dont la forme permet d'obtenir directement un profil s'apparentant au profil final du pneumatique en cours de fabrication.

Ainsi, dans ce cas, on ne retrouve plus de «semi-finis», ni de «nappes», ni de «tringle». Les produits de base tels les mélanges caoutchoutiques et les renforts sous forme de filaments, sont directement appliqués sur le noyau. Ce noyau étant de forme toroïdale, on a plus à former l'ébauche pour passer d'un profil plat à un profil sous forme de tore.

Par ailleurs, les pneumatiques décrits dans ce document ne disposent pas du traditionnel retournement de nappe carcasse autour d'une tringle. Ce type d'ancrage est remplacé par un agencement dans lequel on dispose de façon adjacente à ladite structure de renfort de flanc des filaments circonférentiels, le tout étant noyé dans un mélange caoutchoutique d'ancrage ou de liaison.

Il existe également des procédés d'assemblage sur noyau toroïdal utilisant des produits semi-finis spécialement adaptés pour Une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou de renforts sous forme de filaments.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les fils de renforts d'une nappe carcasse dans le procédé classique, et les fils correspondants, en général appliqués au niveau des flancs, d'un pneumatique produit selon un procédé sans semi-finis.

Le terme «zone d'ancrage» pour sa part, peut désigner tout autant le traditionnel retournement de nappe carcasse autour d'une tringle d'un procédé classique, que l'ensemble formé par les filaments circonférentiels, le mélange caoutchoutique et les portions adjacentes de renfort de flanc d'une zone basse réalisée avec un procédé avec application sur un noyau toroïdal.

Le renforcement de carcasse des pneumatiques est à l'heure actuelle constitué par une ou plusieurs nappes, le plus souvent radiales, retournées autour d'une ou de plusieurs tringles disposées dans les bourrelets. Les bourrelets constituent le moyen permettant de fixer le pneumatique sur la jante. La rigidité du bourrelet ainsi constitué est très grande.

Pour certaines applications particulières où le pneumatique peut par exemple être soumis à des charges importantes ou subir des chocs violents, etc, il peut s'avérer souhaitable de pouvoir affiner certaines caractéristiques telles la rigidité, la résistance aux impacts, etc. Par ailleurs, afin de faciliter l'automatisation de certaines étapes du processus de fabrication des pneumatiques, il peut s'avérer avantageux de revoir la nature et/ou la disposition de certains des éléments constituants.
Dans la technique actuelle, il est assez difficile d'assurer une modulation des caractéristiques du flanc et/ou du bourrelet. Le flanc doit présenter une souplesse importante, et le bourrelet doit au contraire présenter une importante rigidité. Par ailleurs, les renforts que l'on dispose dans cette partie du pneumatique présentent toujours inévitablement une discontinuité: au niveau de l'extrémité radialement supérieure du retournement de carcasse, on passe sans transition dans une zone dépourvue de ce retournement de carcasse, zone qui est donc inévitablement moins rigide.
Enfin, les exigences de coût sont de plus en plus sévères et imposent des gains de productivité de plus en plus difficiles à obtenir, compte tenu de la technicité sans cesse grandissante des produits. Toute méthode ou dispositif permettant de produire des pneumatiques à des cadences plus rapides en conservant le niveau de qualité sont donc potentiellement avantageux.

Le document US-A-3 815 652 décrit un pneumatique selon le préambule de la revendication 1.
Pour tenir compte de cet environnement et de ces contraintes, l'invention prévoit un pneumatique
selon les caractéristiques de la revendication 1.

Un tel arrangement est optimal pour la portion basse du flanc. Il y a un minimum de zone de surépaisseur, pas de risque de contact entre les fils, etc. On prolonge par ailleurs avantageusement la zone de cheminement sensiblement parallèles des filaments depuis le flanc jusque dans la boucle de retournement elle-même.

De manière avantageuse, les parcours respectifs des premier et second filaments sont agencés de façon à ce que, entre le sommet et le bourrelet, un groupe de filaments formé par un premier et un second filament voisins forment au moins une portion de parcours sensiblement parallèles.

Un tel agencement comportant des groupes de filaments sensiblement parallèles permet de réaliser une configuration multifilaments de façon très économique. Les groupes de fils peuvent être appliqués sensiblement simultanément, par exemple au moyen d'une tête de pose unique. De cette façon, et grâce au type particulier d'architecture selon l'invention, il est possible de diviser par deux ou même par trois ou plus le temps de pose des filaments de renfort de type carcasse, en particulier si on réalise la fabrication sur un noyau central préformé à l'image d'un pneumatique.

Par ailleurs, la disposition en groupes sensiblement parallèles permet de disposer les filaments très près les uns des autres, contribuant à augmenter la densité de fils. Cela joue un rôle favorable pour bon nombre de propriétés mécaniques. Ainsi par exemple, cela peut permettre d'augmenter le module, la résistance à la rupture, etc.

De manière avantageuse, les portions de parcours sensiblement parallèles représentent au moins sensiblement 25% du parcours total des filaments entre le sommet et la zone d'ancrage et de préférence entre sensiblement 30% et 80% du parcours total des filaments entre le sommet et la zone d'ancrage.

Dans la mesure où les fils sont posés par paires ou toute autre forme groupée, le temps de pose est réduit, diminuant ainsi le coût de revient.

De manière avantageuse, les portions de parcours sensiblement parallèles sont prévues dans le flanc, sensiblement radialement extérieurement à la zone d'ancrage, et de préférence radialement extérieurement à la zone correspondant sensiblement à l'équateur dudit flanc. C'est structurellement à partir de l'équateur en se dirigeant vers le sommet que la pose sous forme de groupes parallèles est la plus aisées et précise. De préférence, l'équateur considéré est celui correspondant à l'équateur du noyau sur lequel les différents éléments constituants du pneumatique sont assemblés.

Selon un autre exemple avantageux, le pneumatique comprend un troisième filament formant d'une part au niveau du sommet et des flancs, une série de portions transversales s'étendant sensiblement d'un bourrelet à l'autre du pneumatique, et d'autre part, au niveau des bourrelets, des raccords en forme de U réunissant deux portions transversales successives du troisième filament, les parcours respectifs des premier, second et troisième filaments étant de préférence agencés de façon à ce que, entre le sommet et le bourrelet, un groupe de filaments formé par un premier, un second et un troisième filament voisins (ou successifs) forment au moins une portion de parcours sensiblement parallèles.

On peut alors diviser par trois le temps de pose si les fils sont posés en groupe. La densité de pose peut également être augmentée, par des cheminements sensiblement similaires et rapprochés des fils d'un même groupe.

Au moins un agencement de fils suivant un parcours sensiblement circonférentiel est de préférence disposé de façon sensiblement adjacente à ladite structure de renfort au niveau du bourrelet.

Selon un autre exemple avantageux, les portions de parcours sensiblement parallèles suivent des trajectoires sensiblement géodésiques.

Selon un autre exemple de réalisation avantageux, les tronçons "aller" et "retour" d'au moins deux groupes distincts se croisent de façon à former un maillage de fils. Par exemple, les portions de parcours sensiblement parallèles sont agencées de façon à former, sur un côté donné du pneumatique, une trajectoire en forme d'aller-retour circonférentiellement décalés. Ladite trajectoire est avantageusement en forme de V ou de U. Une des portions aller ou retour chemine le long de l'autre portion aller ou retour d'une série de filaments juxtaposés, en croisant des filaments. Il résulte d'une telle configuration un tressage de filaments, se croisant à des angles plus ou moins ouverts selon la position radiale et/ou selon l'inclinaison respective de chacun des filaments.

Le pneumatique peut alors comporter une seule nappe. Une telle simplicité d'architecture et de fabrication, due notamment à la diminution du nombre de constituants, permet de diminuer les coûts.

Selon un autre exemple de réalisation avantageux, un bourrelet comporte une tringle autour de laquelle une portion des fils est enroulée. Ceci procure un ancrage ou maintien efficace et sûr de la structure de renfort dans le bourrelet. Ce mode d'ancrage correspond à une tringle traditionnelle, largement répandue dans l'industrie du pneumatique. On utilise de préférence des fils de type textile afin de faciliter la formation des boucles.

De manière avantageuse, le pneumatique selon l'invention peut être fabriqué au moyen d'un procédé de fabrication d'un pneumatique dans lequel les différents éléments constituants sont tour à tour posés directement sur un noyau dont le profil correspond sensiblement à celui du produit final et dans lequel la pose d'une première structure de renfort d'un premier côté d'un pneumatique et d'une seconde structure de renfort d'un second côté dudit pneumatique sont effectuées sensiblement simultanément.

Dans le cas d'un pneumatique fabriqué selon un tel procédé automatisé dans lequel les différents éléments constituants sont tour à tour posés directement sur un noyau dont le profil correspond sensiblement à celle du produit final, le fait de poser des groupes de fils comportant deux (ou plus) fils est particulièrement avantageux. Par exemple, il en résulte une diminution importante du temps de pose de la structure de renfort.

Dans le présent mémoire, le terme "fil" désigne en toute généralité aussi bien des monofilaments que des multifilaments, ou des assemblages comme des câbles, des retors ou bien encore n'importe quel type d'assemblage équivalent, et ceci, quels que soit la matière et le traitement de ces fils, par exemple traitement de surface ou enrobage ou préencollage pour favoriser l'adhérence sur le caoutchouc.

Pour rappel, "radialement vers le haut", ou "radialement supérieur" signifie vers les plus grands rayons.

On entend par "module d'élasticité" d'un mélange caoutchoutique, un module d'extension sécant obtenu à une déformation d'extension uniaxiale de l'ordre de 10% à température ambiante.

Une structure de renfort ou de renforcement de type carcasse sera dite radiale lorsque ses fils sont disposés à 90°, mais aussi, selon la terminologie en usage, à un angle proche de 90°.

On sait que dans la technique actuelle, la ou les nappes de carcasse sont retournées autour d'une tringle. La tringle remplit alors une fonction d'ancrage de carcasse, c'est à dire reprend la tension se développant dans les fils de carcasse sous l'effet de la pression de gonflage. Dans les configurations décrites dans la présente demande, n'utilisant pas de tringle de type traditionnel, la fonction d'ancrage de la structure de renfort de type carcasse est également assurée.

On sait aussi que, toujours dans l'état de la technique, la même tringle assure en outre une fonction de serrage du bourrelet sur sa jante. Dans les configurations décrites dans la présente demande, n'utilisant de préférence pas dé tringle de type traditionnel, la fonction de serrage est également assurée, notamment par les enroulements de fils circonférentiels les plus près du siège.

Il va sans dire que l'invention peut être utilisée en adjoignant au bourrelet ou à la zone basse du pneumatique en général d'autres éléments, comme certaines variantes vont l'illustrer. De même, l'invention peut être utilisée en multipliant les structures de renfort de même nature, ou même en adjoignant un autre type de structure de renfort.

Tous les détails de réalisation sont donnés dans la description qui suit, complétée par les figures 1 à 12 où:
les figure 1a et 1b sont des coupes radiales montrant esentiellement les flancs, les bourrelets et le sommet d'une première et d'une seconde forme d'exécution d'un pneumatique selon l'invention;
la figure 2 est une représentation schématique vue de dessus d'une portion de la structure de renfort d'un exemple d'un pneumatique selon l'invention, les deux flancs étant mis à plat de chaque côté de la région du sommet ;
la figure 3 est une représentation schématique vue de dessus d'une portion de la structure de renfort d'un autre exemple de pneumatique selon l'invention, les deux flancs étant mis à plat de chaque côté de la région du sommet ;
la figure 4 est une représentation schématique vue de dessus d'une portion de la structure de renfort d'un autre exemple d'un pneumatique selon l'invention, les deux flancs étant mis à plat de chaque côté de la région du sommet ;
la figure 5 est une vue agrandie de la portion gauche de la figure 4 ;
la figure 6 est une vue de côté d'une portion d'un pneumatique non-fini selon l'invention, dans lequel des groupes comportant trois fils sont disposés suivant des parcours de type bias ;
la figure 7 est une vue de côté d'une portion d'un pneumatique non-fini selon l'invention, dans lequel des groupes comportant trois fils sont disposés suivant des parcours de type bias-symétrique, dans lesquels les tronçons « aller » sont symétriques et inversés par rapport au tronçons « retour » , la multiplication des groupes entraînant de ce fait un agencement en forme de tressage ou maillage de fils ;
la figure 8 illustre une vue de côté d'une portion d'un pneumatique non-fini selon l'invention, dans lequel des groupes sont disposés suivant des parcours de type géodésiques ;
les figures 9a, 9b et 9c illustrent des profils méridiens d'une variante comportant une tringle traditionnelle, par exemple constituée d'un câble métallique ou composite ;
les figures 10a, 10b et 10c illustrent, au moyen de vues en perspective d'une coupe d'une portion d'un pneumatique selon l'invention, des exemples de cheminements d'une structure de renfort en groupe en relation avec une structure circonférentielle d'ancrage ;
les figures 11 a à 11c illustrent un exemple d'une méthode permettant la fabrication de pneumatiques tels que ceux décrits dans les figures précédentes, avec la pose sensiblement simultanée d'au moins deux fils ;
la figure 12 illustre un exemple d'une seconde méthode permettant la fabrication de pneumatiques tels que ceux décrits dans les figures 1 à 10, avec la pose sensiblement simultanée d'au moins deux fils, mais avec des moyens de pose différents de ceux illustrés au figures 11 a à 11 c.

Dans les différentes figures, des numéros de références identiques sont utilisés afin d'identifier des éléments similaires.

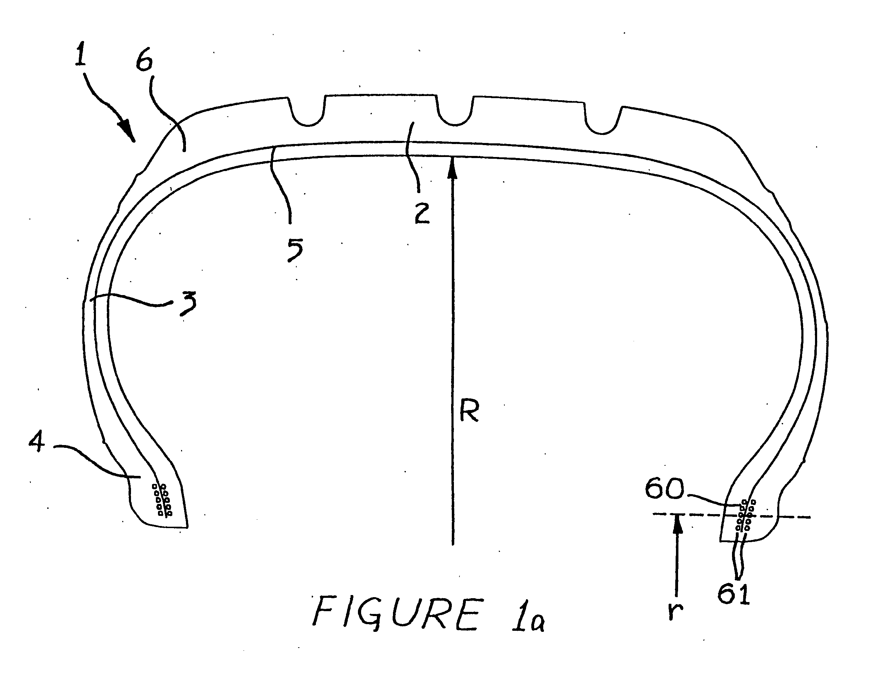

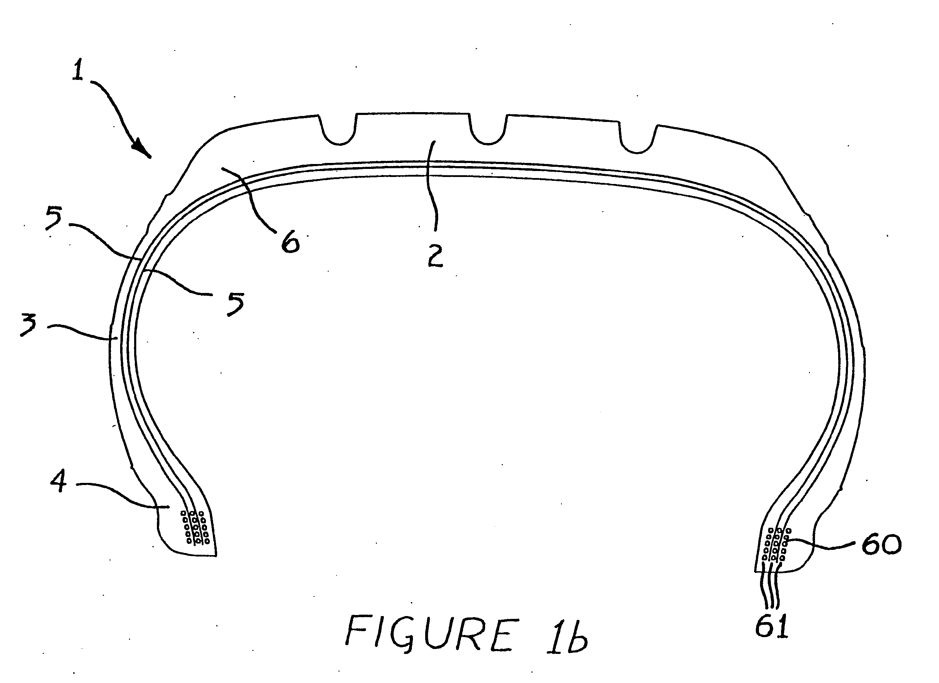

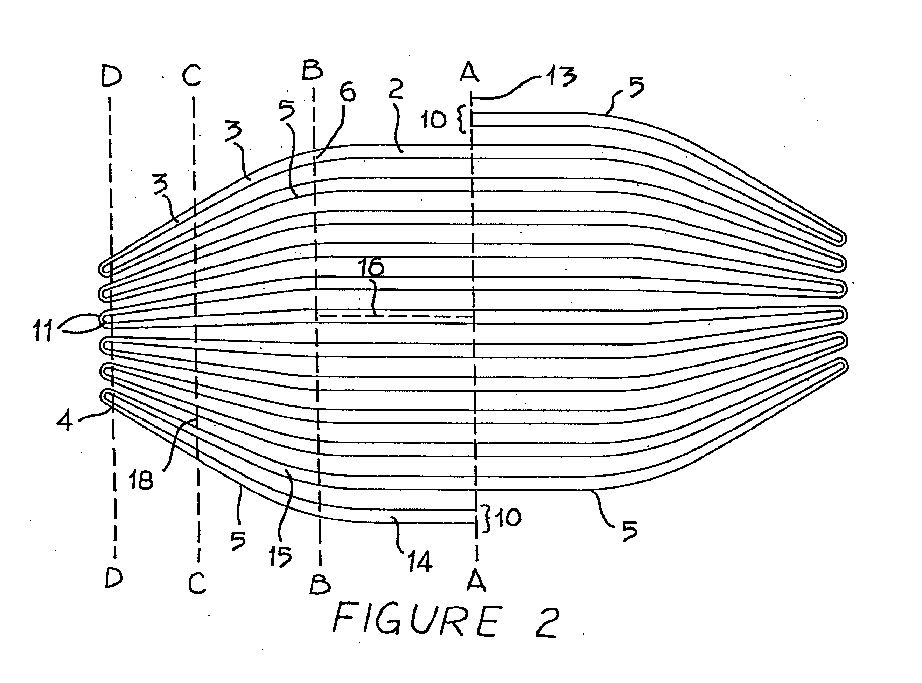

Les figures 1a, 1b et 2 illustrent un premier mode de réalisation du pneumatique 1 selon l'invention. Les principaux éléments constituants sont bien visibles sur les figures 1a et 1b qui présentent une coupe mettant en évidence le profil du pneumatique 1. Celui-ci comprend des flancs 3, de chaque côté, surmontés d'un sommet 2, joignant les deux portions radialement supérieure des flancs 3.

Dans la portion radialement intérieure des flancs 3, se trouvent des bourrelets 4, prévus pour un montage sur une jante de forme et de dimensions adaptées.

Afin d'assurer un parfait ancrage de la structure de renfort, on réalise de préférence un bourrelet composite stratifié. A l'intérieur du bourrelet 4, entre les alignements de fil de la structure de renfort, on dispose des fils 60 orientés circonférentiellement. Ceux-ci sont disposés en une pile 61 comme sur les figures, ou en plusieurs piles adjacentes, ou en paquets, ou en toute disposition judicieuse, selon le type de pneumatique et/ou les caractéristiques recherchées.

Les portions d'extrémité radialement internes de la structure de renfort 5 coopèrent avec les bourrelets. II se crée ainsi un ancrage de ces portions dans lesdits bourrelets de manière à assurer l'intégrité du pneumatique. Afin de favoriser cet ancrage, l'espace entre les fils circonférentiels et la structure de renfort est occupé par un mélange caoutchoutique de liaison. On peut également prévoir l'utilisation de plusieurs mélanges ayant des caractéristiques différentes, délimitant plusieurs zones, les combinaisons de mélanges et les agencements résultants étant quasi-illimités.

Selon une variante d'agencement, on utilise un mélange à sensiblement haut module d'élasticité dans la zone d'intersection entre l'arrangement de fils et la structure de renfort. A titre d'exemple non limitatif, le module d'élasticité d'un tel mélange peut atteindre ou même dépasser 15 Mpà, et même dans certains cas atteindre, voire dépasser 30 à 40 Mpa.

Ce mélange est avantageusement disposé de façon à être en contact direct avec les portions adjacentes de la structure de renfort 5. Dans les configurations traditionnelles, une nappe carcasse (fil imprégné dans une couche de mélange caoutchoutique) est appliquée. Il en résulte donc une mince couche intermédiaire de mélange à plus faible module qui se trouve entre le mélange à haut module et la portion de structure de renfort. Avec le contact direct, donc sans la présence de cette couche mince de mélange à plus faible module, l'impact de la présence du mélange d'ancrage dans la zone est amplifié. En effet, la traditionnelle couche mince à plus faible module engendre des pertes d'énergies, qui peuvent occasionner une détérioration des propriétés mécaniques.

Les arrangements de fils peuvent être agencés et fabriqués de plusieurs façons. Par exemple, une pile 61 peut avantageusement être constituée d'un seul fil enroulé (sensiblement à zéro degré) en spirale sur plusieurs tours, de préférence depuis le plus petit diamètre vers le plus grand diamètre. Une pile peut également être constituée de plusieurs fils concentriques posés l'un dans l'autre, de façon à ce que l'on superpose des anneaux de diamètre progressivement croissant. Il n'est pas nécessaire d'ajouter un mélange de caoutchouc pour assurer l'imprégnation du fil de renfort, ou des enroulements circonférentiels de fil.

Afin de positionner les fils de renforcement de façon aussi précise que possible, il est très avantageux de confectionner le pneumatique sur support rigide, par exemple un noyau rigide imposant la forme de sa cavité intérieure. On applique sur ce noyau, dans l'ordre requis par l'architecture finale, tous les constituants du pneumatique, qui sont disposés directement à leur place finale, sans que le profil du pneumatique doive être retourné ou replié lors de la confection.

Cette confection peut par exemple utiliser les dispositifs décrits dans le brevet EP 0 580 055, ainsi que la demande française 00/01394, pour la pose des fils de renfort de carcasse, et dans le document EP 0 264 600 pour la pose des gommes caoutchoutiques. Le pneumatique peut être moulé et vulcanisé comme exposé dans le brevet US 4 895 692.

Selon ce premier exemple (figure1a), un premier et un second filaments de renfort de type carcasse 5 sont agencés le long de la circonférence du pneumatique de façon à former une structure de renfort partiellement torique ou en forme de U inversé lorsque observé selon une section du pneumatique comme à la figure 1a. Ainsi, chacun des filaments s'étend transversalement d'un côté à l'autre du pneumatique. Dans les différents exemples des figures 1 à 8, ce cheminement se prolonge d'un bourrelet à l'autre. Le déplacement circonférentiel du filament est prévu dans la portion radialement la plus intérieure du parcours ; le filament est alors retourné de sensiblement 180° de manière à remonter sur le flanc 3, traverser la zone du sommet 2, puis se prolonger -radialement vers l'intérieur le long du flanc opposé, jusqu'à une position radiale sensiblement symétrique à celle du premier flanc. Le filament est alors retourné de sensiblement 180 ° pour réamorcer un nouveau parcours d'un côté à l'autre de façon similaire. Les retournements forment des raccords 11, avantageusement en forme de U, mais possiblement suivant un angle plus aigu ou encore suivant une forme moins régulière.

Les premier et second filaments sont agencés circonférentiellement de façon similaire, mais suivant des positions circonférentielles légèrement décalées, de façon à ne pas se superposer sur des longueurs importantes. Tel qu'illustré à la figure 2, les filaments forment avantageusement des groupes 10 de filaments. Dans l'exemple de la figure 2, il s'agit de groupes de deux filaments. Un premier tronçon 14 « aller » permet au groupe de s'étendre depuis le sommet 2 vers un des flancs 3. A la zone de retournement, les deux filaments du groupe sont retournés pour former des raccords 11. Afin de positionner plusieurs raccords sensiblement rapprochés, un premier raccord est placé radialement intérieurement, puis un second raccord est placé radialement extérieurement.

Dans le cas où plus de deux raccords sont présents, ils sont positionnés successivement depuis un premier raccord radialement extérieur, vers un second, puis un troisième, etc, toujours plus vers une position radialement intérieur. On forme ainsi une sorte d'agencement multi-raccords, avec un raccord externe à l'intérieur duquel se situe un ou plusieurs raccords internes, tous disposés les uns dans les autres.

Au-delà du raccord, le groupe de fils poursuit sa trajectoire vers le sommet en formant un second tronçon 15 « retour ». La succession ou alternance de raccords d'un bourrelet à l'autre est telle qu'un premier raccord formé sur un premier filament 5 intérieur dans un premier bourrelet est disposée radialement extérieurement dans le second bourrelet, pour une position circonférentielle sensiblement voisine du premier raccord. Ceci est bien illustré aux figures 2 à 6.

La figure 1a présente une variante avec une seule structure de renfort 5, tandis que la figure 1 b présente une variante comportant deux structures, l'une interne et l'autre externe, séparées par une couche de mélange caoutchoutique.

Dans chacun des tronçons 14 et 15, les groupes comportent chacun au moins une portion de parcours 16 sensiblement parallèles, dans lesquelles les deux filaments voisins d'un même groupe cheminent suivant des trajectoires sensiblement parallèles.

La figure 2 illustre un exemple de réalisation dans lequel les portions de parcours 16 sensiblement parallèles sont sensiblement comprises entre la portion médiane 13 du sommet, selon la ligne A-A, et la région de l'épaule 6, selon la ligne B-B.

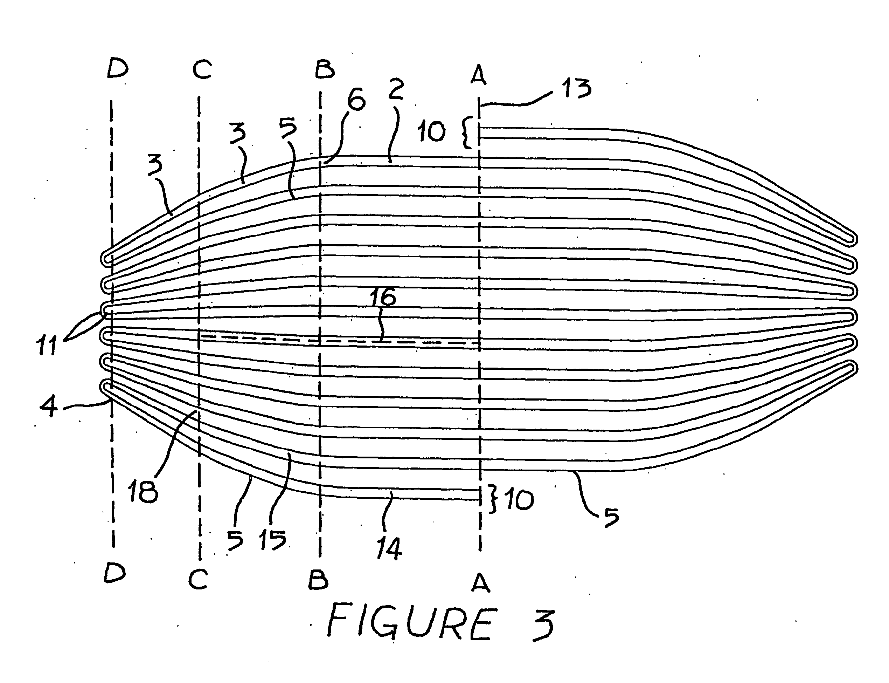

La figure 3 illustre un exemple de réalisation dans lequel les portions de parcours 16 sensiblement parallèles sont sensiblement comprises entre la portion médiane 13 du sommet, selon la ligne A-A, et la région de l'équateur, selon la ligne C-C.

Dans ces deux exemples, la distance circonférentielle séparant deux filaments voisins ou d'un même groupe 10, est inférieure à la distance entre deux filaments voisins appartenant chacun à deux groupes distincts.

Dû aux trajectoires sensiblement radiales des fils, qui s'apparentent en fait à des trajectoires sensiblement méridiennes, pour un pas P donné, l'écartement circonférentiel entre deux groupes de fils voisins varie sensiblement régulièrement entre la zone basse et la région du sommet du pneumatique. Le plus souvent, dû au rayon inférieur en zone basse du pneumatique, les filaments y sont plus près les uns des autres. Au fur et à mesure qu'on s'approche du sommet, le rayon devient plus grand et les filaments disposent alors de plus d'espace circonférentiel entre eux. Les figures 2 à 7 illustrent bien ce contexte puisqu'il s'agit de projections dans le plan d'arrangements qui sont prévus pour occuper une position spatiale telle que la zone du sommet est sur un premier rayon R et la zone du bourrelet 4 est positionnée sur un autre rayon r plus petit que le premier rayon R. La forme sensiblement torique d'un pneumatique rend inévitable ce genre de variation de rayon. Il est donc en pratique impensable d'avoir une distance inter-fils constante entre R et r.

La présente invention est à contre-courant de cet enseignement puisque on conserve la distance entre deux fils sur une portion donnée en formant des groupes. En contre-partie, la distance entre les fils de deux groupes voisins varie sensiblement entre les positions radiales R et r de façon à compenser les portions parallèles des groupes.

Les cadences industrielles de production et les contraintes de productivité sont aujourd'hui telles que des vitesses de fabrication très élevées sont requises et font que la régularité de la pose n'est pas absolue. Les exigences mécaniques du produit tolèrent par ailleurs une certaine marge quant à la précision, sans aucunement en affecter la qualité finale. Ainsi, selon l'invention, un pneumatique peut comporter des agencement filaires présentant des trajectoires filaires d'une régularité inférieure à celle illustrée dans les figures.

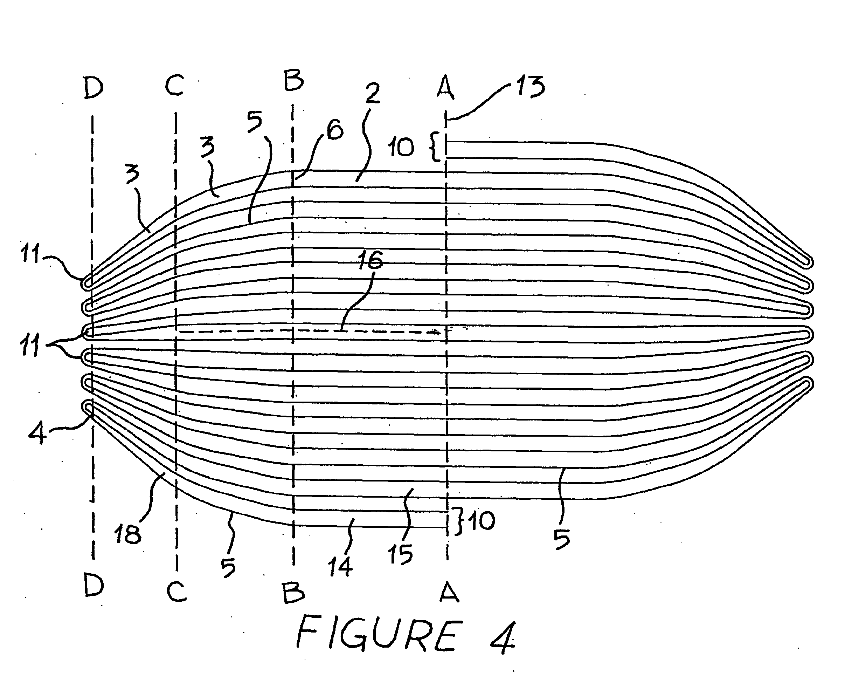

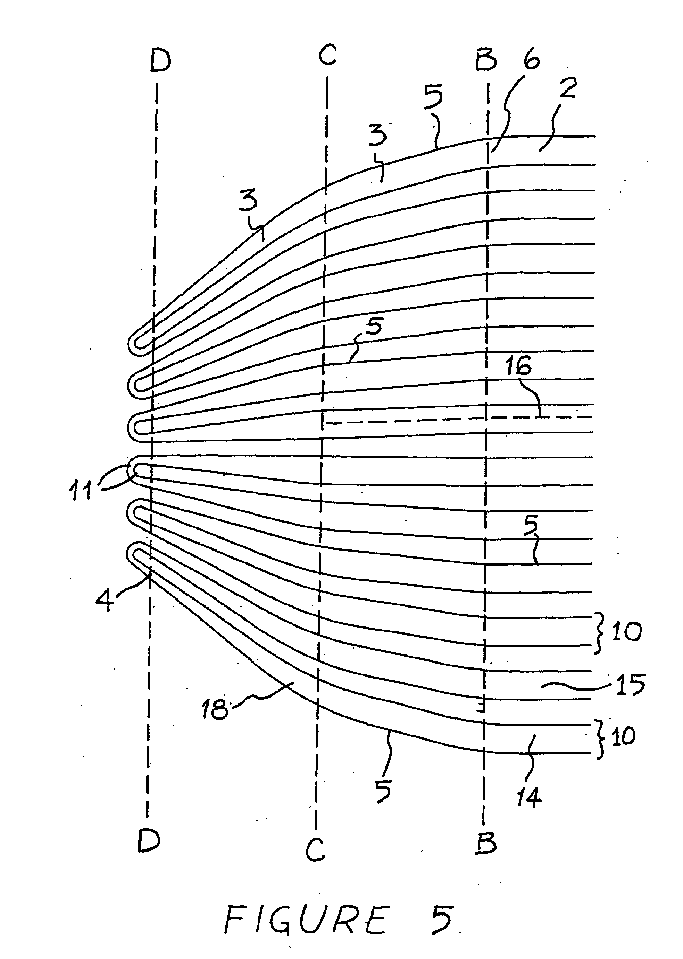

La figure 4 présente un autre exemple de réalisation dans lequel la distance circonférentielle séparant deux filaments voisins ou d'un même groupe, est supérieure à la distance entre deux filaments voisins appartenant chacun à deux groupes voisins. Afin de mieux visualiser l'effet créé par ce type de configuration, la figure 5 illustre un agencement similaire à celui de la figure 4, mais selon une vue partielle agrandie.

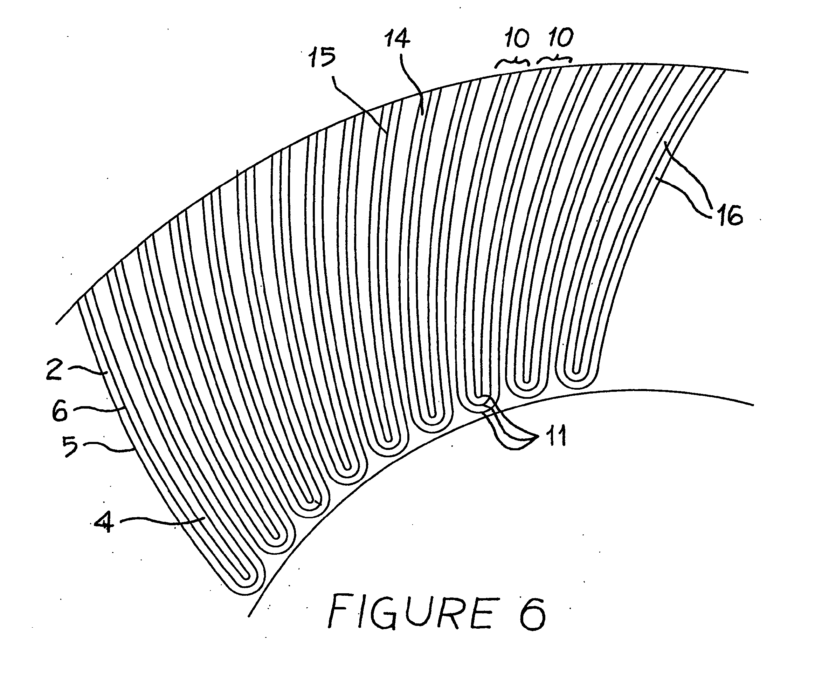

Les figures 6 à 8 illustrent divers exemples de réalisation dans lesquels des groupes de fils sont agencés suivant différents parcours de type bias. La figure 6 présente une vue de côté d'une variante dans laquelle chaque groupe 10 comporte trois fils 5 suivant des parcours de type bias (non radial). Les portions de parcours 16 sensiblement parallèles peuvent s'étendre sensiblement d'un bourrelet à l'autre. La compensation de dimension pour passer du rayon inférieur r au rayon extérieur R s'effectue grâce à un écart inter-groupes croissant du bourrelet vers le sommet. Selon diverses variantes non illustrées, le nombre de fils par groupe peut être différent, par exemple de deux fils, quatre fils ou plus.

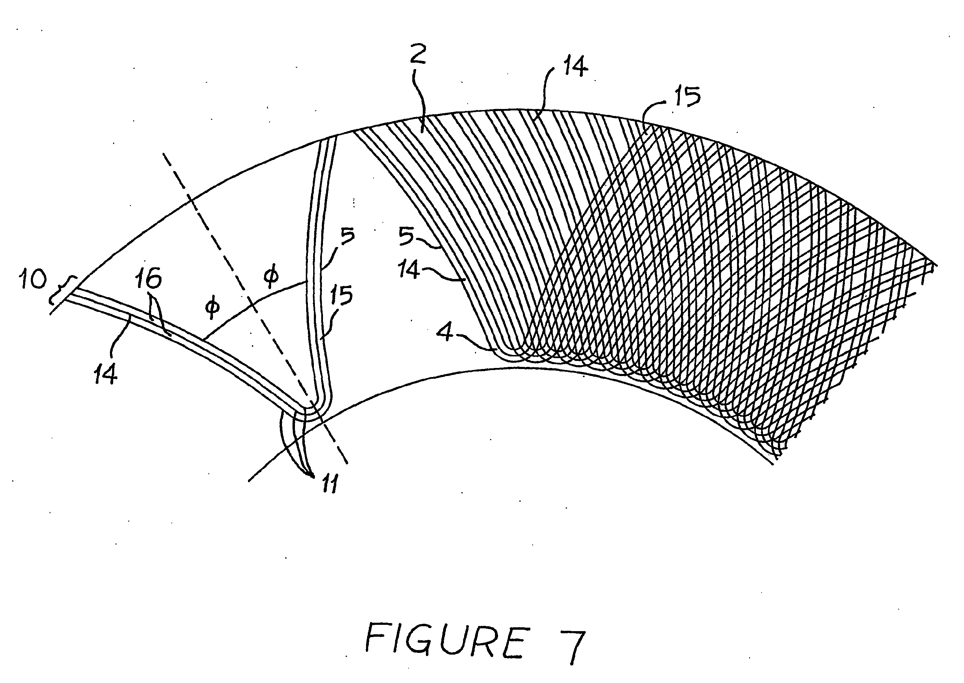

La figure 7 illustre un autre type de configuration de type bias, dans laquelle les groupes 10, après un premier tronçon « aller » 14 du sommet 2 vers un premier bourrelet 4 suivant un angle ø donné par rapport à une droite sensiblement radiale, forment un retournement ou raccord 11 pour retourner vers, le sommet. Lorsque mesuré à la même position radiale que l'angle ø du tronçon « aller », le tronçon « retour » 15 forme un angle inverse (-ø) par rapport au tronçon « aller ».

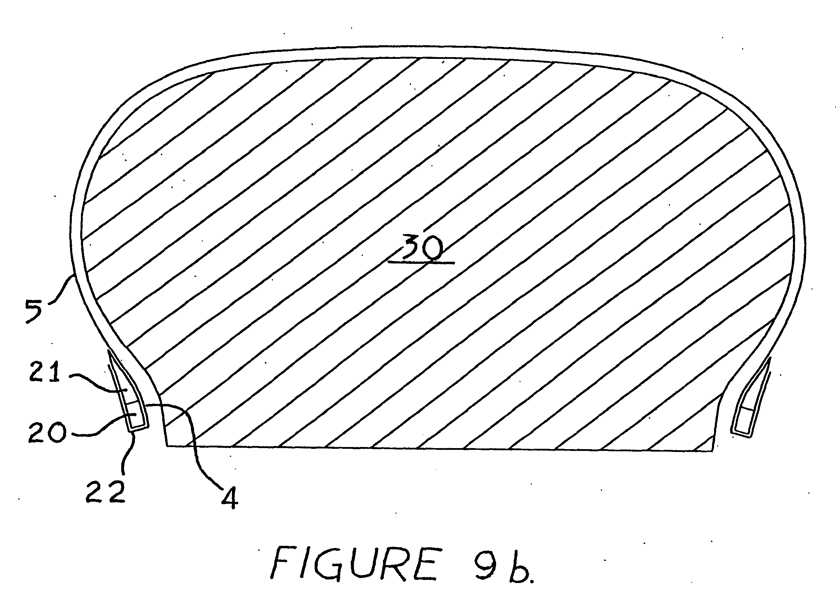

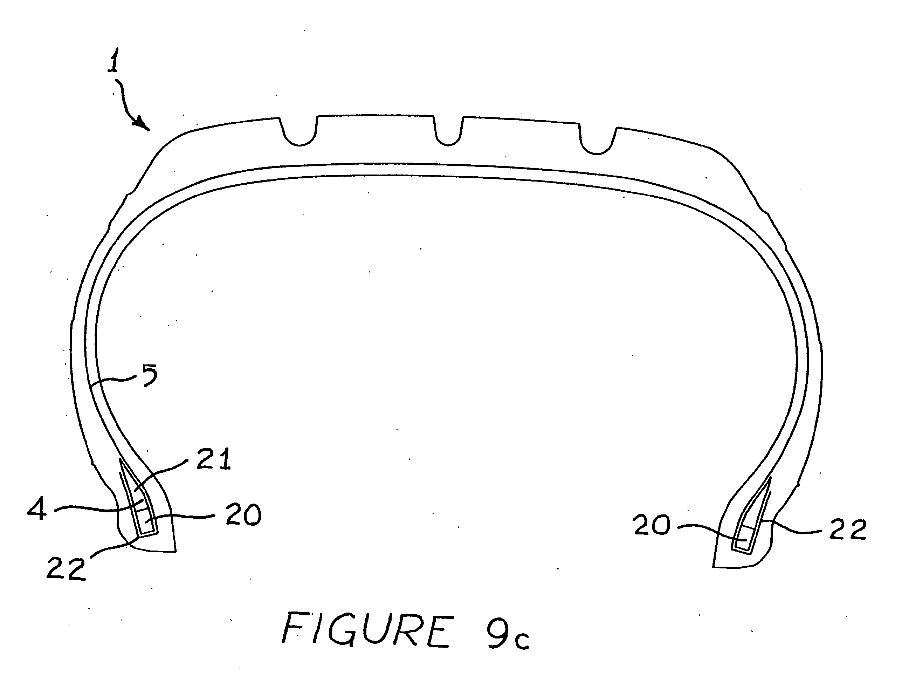

L'angle ø peut varier par exemple entre 5 et 45 degrés, suivant les cas. La portion de gauche de la figure 9 illustre clairement un exemple de parcours d'un groupe 10 isolé des autres pour faciliter la compréhension. La portion de droite de la même figure illustre l'arrangement résultant lorsque les groupes 10 constituant la structure de renfort sont disposés côte à côte suivant la direction circonférentielle: Sur cette portion, on voit que les tronçons « retour » forment un tissage ou quadrillage en repassant par-dessus ou par-dessous les tronçons « aller ».

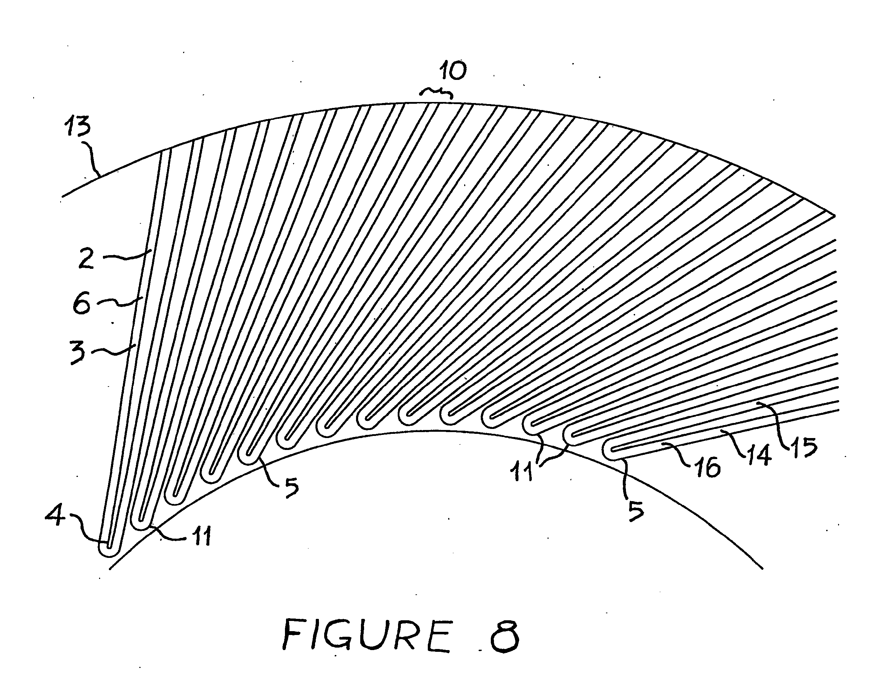

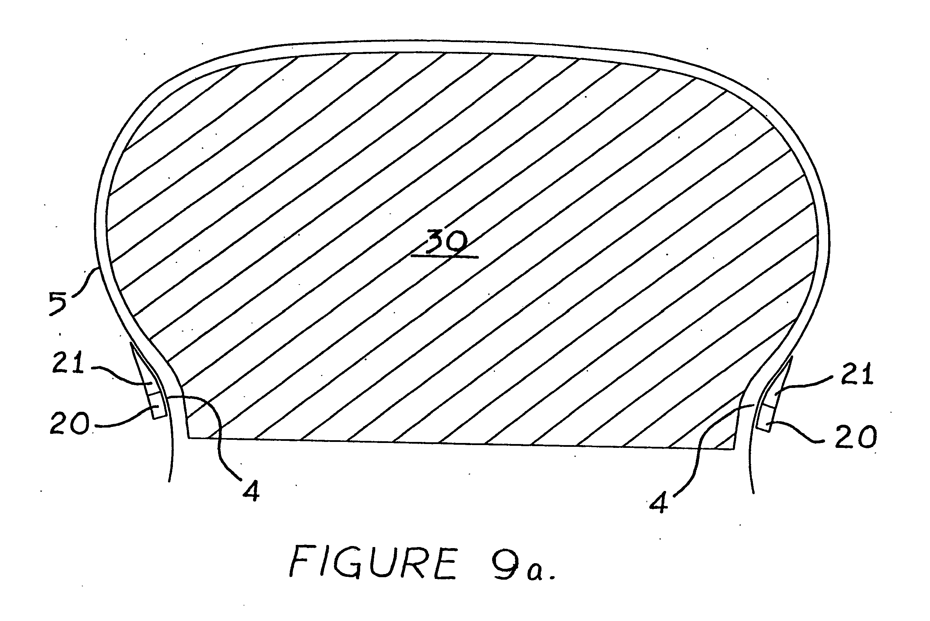

La figure 8 illustre une autre variante de configuration de type bias dans laquelle des groupes de deux fils 5 suivent des parcours sensiblement géodésiques.

Dans les exemples illustrés des figures 6 à 8, les groupes de fils 5 comportent des portions de parcours 16 sensiblement parallèles s'étendant sensiblement d'un bourrelet à l'autre du pneumatique. Selon diverses variantes non illustrées, ces portions 16 peuvent être limitées, par exemple d'un équateur à l'autre, ou d'un point quelconque d'un premier flanc vers un point symétrique de l'autre flanc.

Les figures 9a, 9b et 9c illustrent des profils méridiens d'une variante comportant une tringle traditionnelle 20, par exemple constituée d'un câble métallique ou composite. En 9a, on aperçoit le fils 5 cheminant le long d'un noyau central contre lequel les différents éléments constituants du pneumatique sont appliqués successivement. Le fil chemine d'un bourrelet 4 à l'autre et se prolonge radialement intérieurement par rapport à la tringle 20. Lés agencements des fils 5 en groupe 10, suivant des portions « aller » 14 et « retour » 15 formant des raccords 11 au niveau des bourrelets peuvent être, à cette étape de fabrication, comparables ou similaires à celles présentées aux figures 1 à 8. Ainsi, les raccords 11 peuvent se situer radialement intérieurement à la tringle 20.

En 9b, on aperçoit le retournement du fil 5, tout d'abord contre la portion radialement intérieure de la tringle 20, puis contre la portion axialement extérieure de cette tringle, afin de sensiblement entourer ou envelopper cette dernière. La portion retournée 22 comprend avantageusement tous les raccords 11.

Tel qu'illustré à la figure 9c, les éléments restant constituant le pneumatique sont ensuite appliqués de façon à former un pneumatique 1 selon l'invention et le noyau central peut être retiré, de préférence après vulcanisation.

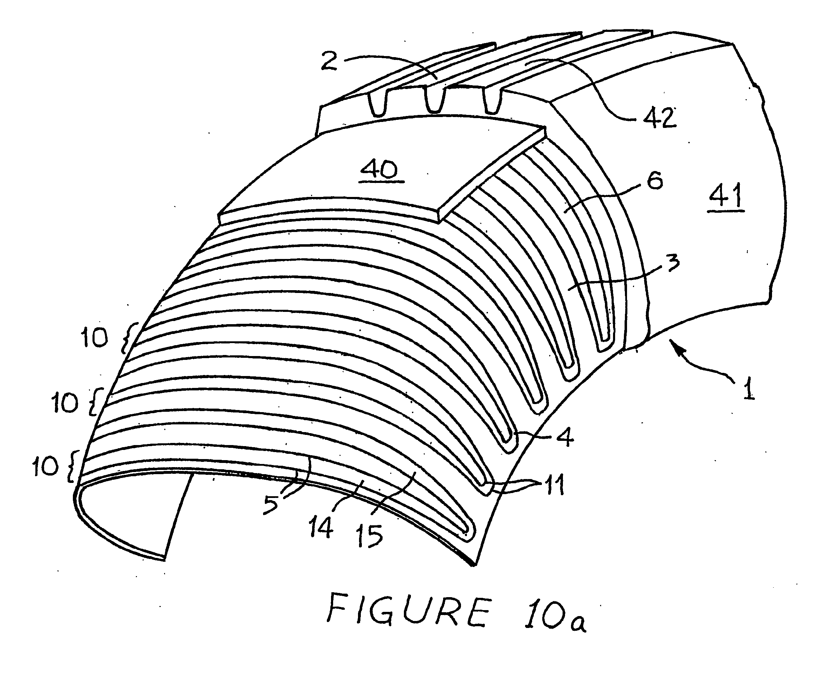

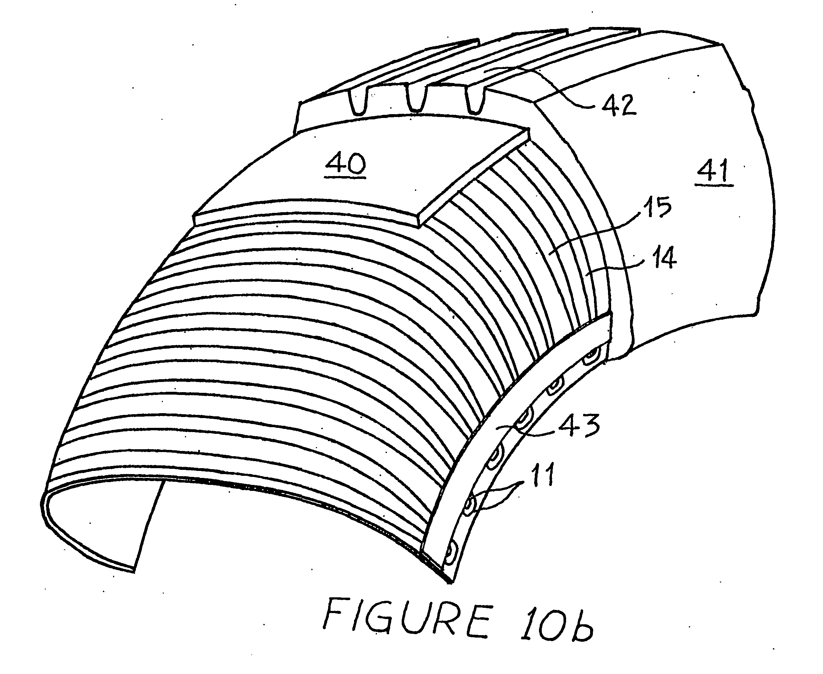

La figure 10a illustre une vue en perspective de la forme d'exécution illustrée à la figure 3. En plus des éléments préalablement décrits, la figure 10a montre une portion d'une couche ou nappe sommet 40, s'étendant circonférentiellement sur une portion du sommet 2 du pneumatique. Une telle nappe comporte avantageusement au moins un type de renfort, par exemple de type textile, agencé dans la nappe suivant une disposition sensiblement à 0° suivant la direction circonférentielle ou encore avec un angle donné fixe ou variable par rapport à cette même direction. Une bande de roulement 42 et une couche de protection des flancs 41 complètent le produit.

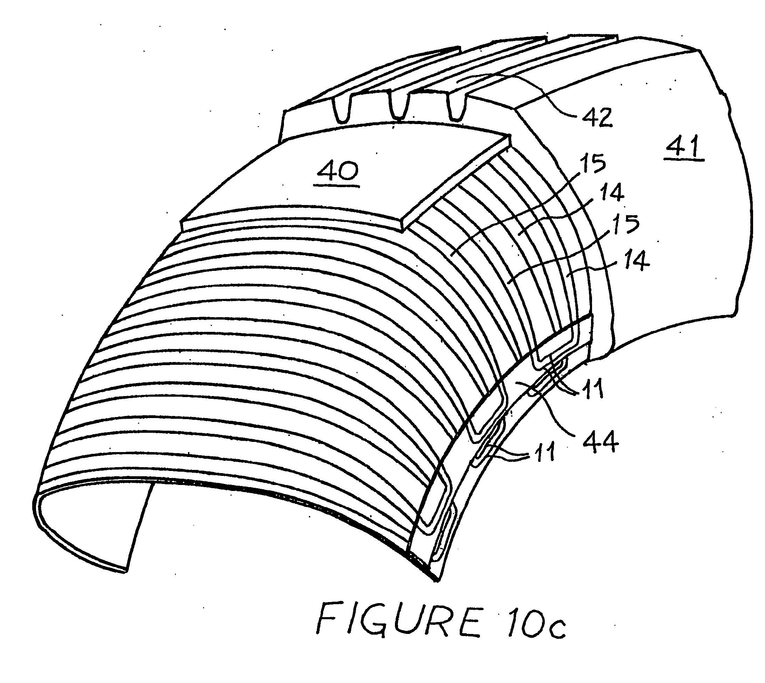

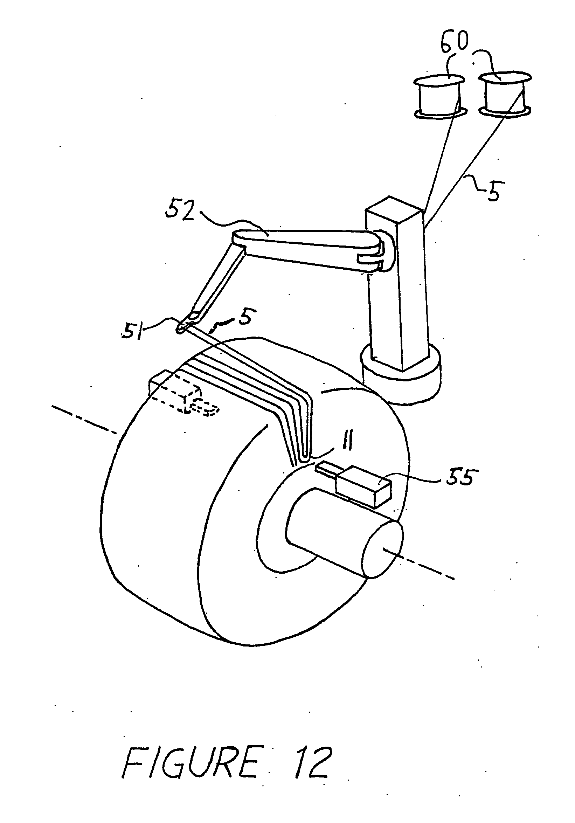

Les figures 10b et 10c illustrent des variantes de la figure 12a dans lesquelles des exemples d'ancrages de la structure de renfort dans les bourrelets sont illustrés. En 10b, la zone d'ancrage 43 est appliquée contre la base des fils 5, de préférence en laissant une couche de mélange caoutchoutique entre les fils 5 et le ou les fils de la zone d'ancrage. La zone d'ancrage est de préférence telle que préalablement décrite. Une disposition en sandwich, telle qu'à la figure 1a, avec des piles de chaque côté de la structure de renfort peut également être prévue.

La variante de la figure 10c comporte une zone 44 imbriquée entre les bases de la structure de renfort. La portion basse ou radialement interne d'un tronçon comprend en alternance un premier ensemble de raccords 11 disposés axialement extérieurement par rapport à la zone 44 et un autre ensemble raccords 11 disposés axialement intérieurement par rapport à la zone 44.

Cette séparation axiale permet de placer un plus grand nombre de fils même lorsque le rayon est petit. Les propriétés mécaniques telles la rigidité peuvent également être optimisées. Tel qu'illustré en 10c, dans cette variante, les portions « aller » 14 et « retour » 15 d'un groupe de fils 15 sont avantageusement espacées et séparées par au moins une portion « aller » et/ou « retour » d'un autre groupe de fils. En plus d'être espacés axialement, des ensembles successifs de raccords 11 peuvent également être décalés radialement, par exemple en formant des groupes de deux raccords, chaque groupe étant espacés radialement d'un autre, tel qu'illustré à la figure 10c.

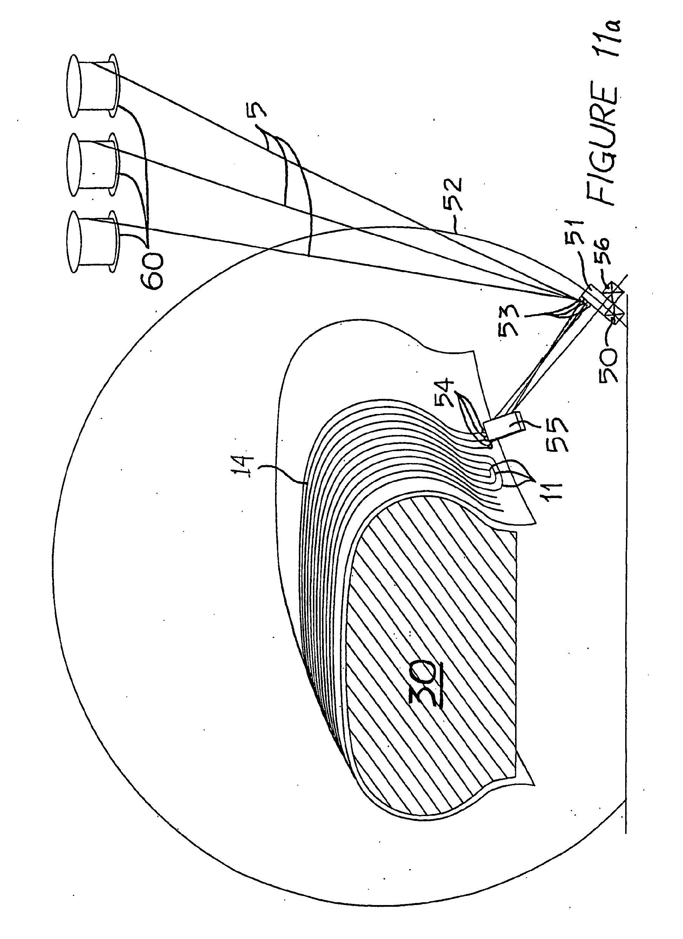

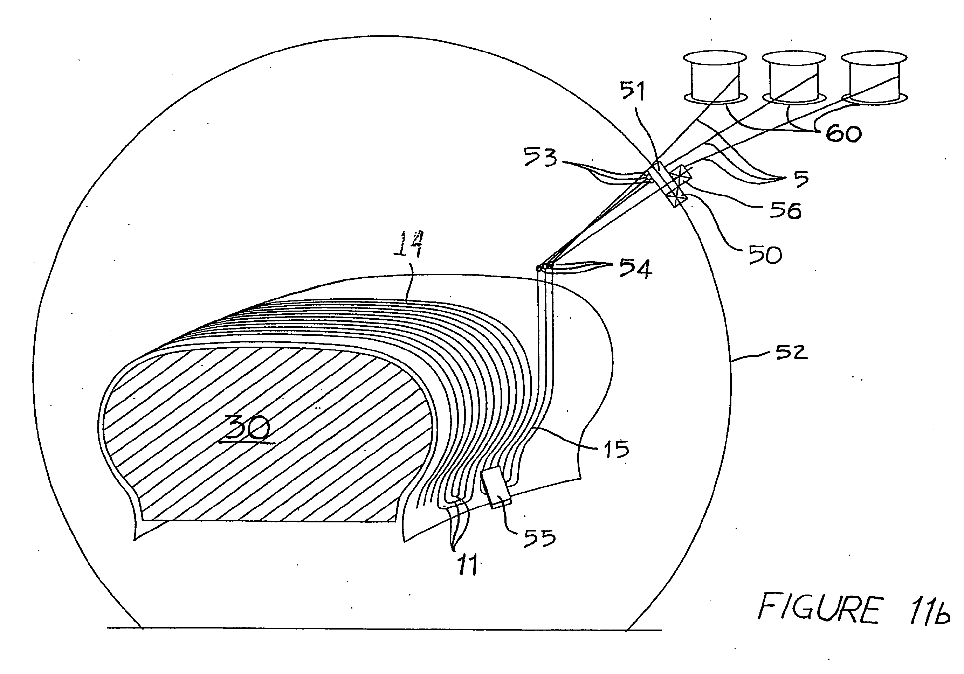

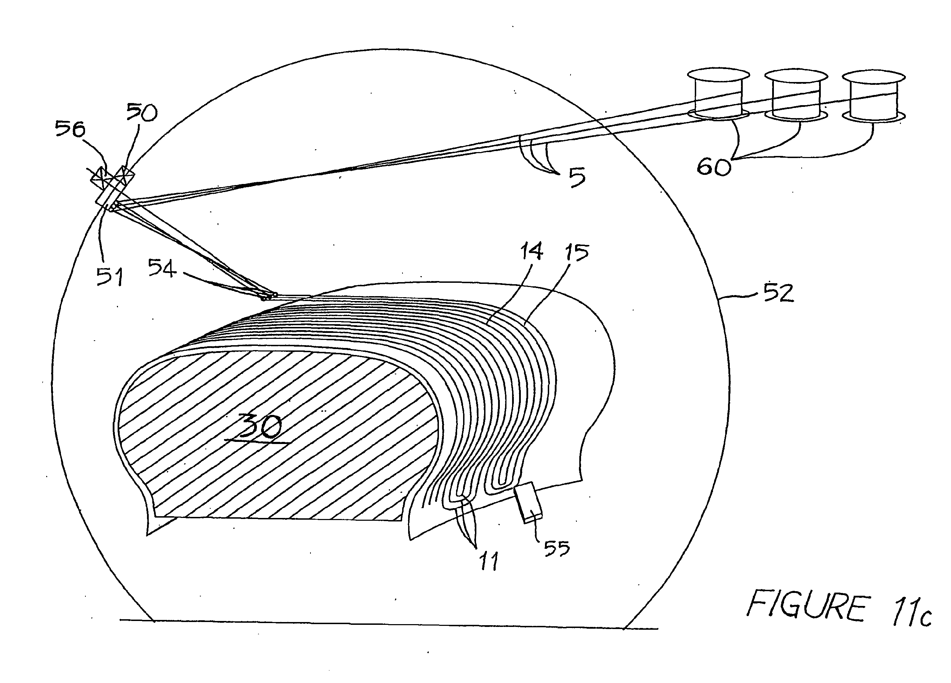

Les figures 11 a et 11 d illustrent un exemple d'une méthode permettant la fabrication de pneumatiques tels que ceux décrits dans les figures précédentes, avec la pose sensiblement simultanée d'au moins deux fils 50. L'utilisation de cette méthode facilite l'obtention de portions de parcours sensiblement parallèles tels que préalablement décrit. Des moyens de stockage ou d'approvisionnement permettent l'acheminement de deux, trois (ou même plus) fils susceptibles d'être appliqués sur une première couche de mélange caoutchoutique formé sensiblement à l'image du profil du produit fini. Avant application, les fils sont disposés à proximité immédiate les uns des autres à des distances correspondant sensiblement à la distance prévue entre les fils d'un même groupe. Pour l'application des fils contre le mélange, le moyen de pose se déplace dans l'espace, par exemple d'un bourrelet à l'autre, suivant le parcours que les fils à poser doivent effectuer dans le pneumatique.

Ainsi, un groupe de fils est guidé par un moyen de pose pour application suivant un parcours prédéfini. La pose peut être effectuée soit par guidage du groupe jusqu'à une distance sensiblement infinitésimale du produit destiné à recevoir les fils, soit par tassement ou par application d'un effort de pose au moyen d'un outil approprié jusqu'à entrer en contact avec le mélange caoutchoutique préalablement appliqué. Ce mélange est de préférence collant, permettant ainsi au groupe de fils d'être retenu ou maintenu en place dès qu'un léger contact est effectué entre les fils et le mélange caoutchoutique. Le groupe est donc guidé d'un bourrelet à l'autre du pneumatique, en cheminant sur les flancs et le sommet.

Une fois posé jusqu'à une portion radialement inférieure d'un bourrelet, formant ainsi un tronçon « aller », le groupe de fils est guidé de façon à se déplacer circonférentiellement ou angulairement, pour permettre au groupe de fils de cheminer sur le profil suivant un parcours sensiblement voisin à la portion « aller » pour former un tronçon « retour », s'étendant jusqu'au bourrelet opposé.

D'autre part, les figures 11a à 11d illustrent de façon schématique un mécanisme permettant la pose de groupes de fils telle que décrite ci-dessus. Des réserves 60 de fils permettent d'approvisionner le mécanisme de pose. Ce dernier comporte une série de moyens de guidages 53, 54 (de préférence autant de moyens que de fils à poser), de préférence, mobiles d'un côté à l'autre du pneumatique, actionnés par un moyen de commande 50, 51, 52. Dans l'exemple illustré, le moyen de commande comporte un premier moyen moteur 50 et des organes de transport 51 et 52, comme par exemple un coulisseau mobile sur un rail, permettant de déplacer dans l'espace les moyens de guidage 53, 54 des fils 5 groupés par exemple par deux ou par trois (tel qu'illustré). La figure 11a illustre un exemple de débattement des moyens de guidage d'un côté du pneumatique. Le guidage le plus près possible du profil jusqu'au niveau du bourrelet permet d'effectuer une pose avantageusement précise et régulière. Les moyens de guidage emmènent les fils en position basse ; un déplacement angulaire relatif entre les guides 54 et le pneumatique en cours d'assemblage permet de déplacer les fils en translation pour former les raccords 11. Pour ce faire, les moyens de guidage 54 sont avantageusement entraînés en rotation sur eux-mêmes, de façon à former les raccords 11, par exemple à l'aide d'un deuxième moyen moteur 56.

Pour faciliter les positionnements respectifs entre le flanc les organes de pose, on peut aussi faire en sorte que, pendant la rotation des moyens de guidage 54, soit le pneumatique subit une rotation de quelques degrés, soit le guide 54 se déplace le long de la zone basse, soit une combinaison des deux. Selon une variante avantageuse, telle qu'illustré, un organe d'appui 55 exerce une légère pression contre la base des fils avant de conformer les raccords. On évite ainsi tout glissement ou déplacement accidentel des fils pendant la pose.

La figure 11b montre l'évolution du parcours quelques instants plus tard, alors qu'un raccord a été réalisé, que le guide 54 remonte le long du flanc pour effectuer la pose d'un autre tronçon, circonférentiellement espacé du précédent.

La figure 11c illustre le même pneumatique alors que le coulisseau arrive du côté opposé ; le guide 54 entraîne les fils dans la région de l'épaulé. La pose le long du flanc opposé et la réalisation des raccords correspondants est réalisée de façon similaire à celle préalablement décrite du premier flanc.

Selon une variante avantageuse, les distance entre les fils avant pose est variable ou ajustable, de façon à permettre de poser les fils avec des espaces inter-fils plus ou moins grands selon les types de produits, voire avec des espaces variables sur un même produit, par exemple en fonction de la position sur le profil.

La figure 12 illustre une variante avantageuse dans laquelle les moyens de guidage 54 sont disposés sur un bras ou robot multi-axes susceptible de déplacer lesdits moyens 54 le long du cheminement des filaments 5. Les tronçons aller 14, retour 15, et les raccords 11 sont agencés et réalisés de façon similaires à ce qui a été présenté pour les figures 11a à 11c.

## Revendications

1. Pneumatique (1) comportant au moins une structure de renfort de type carcasse ancrée de chaque côté du pneumatique dans un bourrelet (4) dont la base est destinée à être montée sur un siège de jante, une armature de sommet, chaque bourrelet (4) se prolongeant radialement vers l'extérieur par un flanc (3), les flancs rejoignant radialement vers l'extérieur une bande de roulement, la structure de renfort comprenant:
- un premier filament (5) formant d'une part au niveau du sommet et des flancs (3), une série de portions transversales s'étendant d'un bourrelet (4) à l'autre du pneumatique, et d'autre part, au niveau des bourrelets, des raccords (11) en forme de U réunissant deux portions transversales successives du premier filament (5),
- un second filament (5) formant d'une part au niveau du sommet et des flancs (3), une série de portions transversales s'étendant d'un bourrelet (4) à l'autre du pneumatique, et d'autre part, au niveau des bourrelets, des raccords (11) en forme de U réunissant deux portions transversales successives du second filament (5),
- les premier et second filaments (5) étant agencés de façon à ce que, pour une position circonférentielle donnée du pneumatique, dans un premier bourrelet, le premier filament (5) forme un raccord (11) radialement extérieur, radialement à l'intérieur duquel un raccord (11) intérieur formé par le second filament est disposé, et dans le second bourrelet, le second filament (5) forme un raccord (11) radialement extérieur, radialement à l'intérieur duquel un raccord (11) intérieur formé par le premier filament est disposé, **caractérisé en ce que** lesdits raccords (11) sont formés sans contact entre les fils (5).

2. Pneumatique selon la revendication 1, dans lequel les parcours respectifs des premier et second filaments (5) sont agencés de façon à ce que, entre le sommet et le bourrelet, un groupe (10) de filaments (5) formé par un premier et un second filament voisins forment au moins une portion de parcours (16) parallèles.

3. Pneumatique selon la revendication 2, dans lequel les portions de parcours (16) parallèles représentent au moins sensiblement 25 % du parcours total des filaments entre le sommet et la zone d'ancrage.

4. Pneumatique selon la revendication 3, dans lequel les portions de parcours (16) parallèles représentent entre sensiblement 30 % et 80 % du parcours total des filaments entre le sommet et la zone d'ancrage.

5. Pneumatique selon l'une des revendications 1 ou 2, dans lequel les portions de parcours (16) parallèles sont prévues dans le flanc, sensiblement radialement extérieurement à la zone d'ancrage.

6. Pneumatique selon l'une des revendications 1 ou 2, dans lequel les portions de parcours (16) parallèles sont prévues sensiblement radialement extérieurement à l'équateur de chaque flanc.

7. Pneumatique selon l'une des revendications précédentes, comprenant un troisième filament (5) formant d'une part au niveau du sommet et des flancs, une série de portions transversales s'étendant d'un bourrelet à l'autre du pneumatique, et d'autre part, au niveau des bourrelets, des raccords (11) en forme de U réunissant deux portions transversales successives du troisième filament.

8. Pneumatique selon la revendication 7, dans lequel les parcours respectifs des premier, second et troisième filaments (5) sont agencés de façon à ce que, entre le sommet et le bourrelet, un groupe de filaments formé par un premier, un second et un troisième filament voisins forment au moins une portion de parcours (16) parallèles.

9. Pneumatique selon l'une des revendications 2 à 8, dans lequel les portions de parcours (16) parallèles suivent des trajectoires sensiblement géodésiques.

10. Pneumatique selon l'une des revendications précédentes, dans lequel les tronçons "aller" (14) et "retour" (15) d'au moins deux groupes distincts se croisent de façon à former un maillage de fils.

11. Pneumatique selon l'une des revendications précédentes, dans lequel au moins un agencement de fils suivant un parcours (16) circonférentiel est disposé de façon adjacente à ladite structure de renfort au niveau du bourrelet (4).

12. Pneumatique selon l'une des revendications précédentes, dans lequel lesdits fils (5) ont, dans la boucle de retournement, des cheminements parallèles.

## Claims

1. A tyre (1) comprising at least one reinforcement structure of carcass type anchored on either side of the tyre in a bead (4), the base of which is intended to be mounted on a rim seat, a crown reinforcement, each bead (4) being extended radially towards the outside by a sidewall (3), the sidewalls joining a tread radially towards the outside, the reinforcement structure comprising:
- a first filament (5) forming on one hand at the level of the crown and the sidewall (3) a series of transverse portions extending from one bead (4) of the tyre to the other, and on the other hand, at the level of the beads, U-shaped connections (11) joining two successive transverse portions of the first filament (5),
- a second filament (5) forming on one hand at the level of the crown and the sidewalls (3) a series of transverse portions extending from one bead (4) of the tyre to the other, and on the other hand, at the level of the beads, U-shaped connections (11) joining two successive transverse portions of the second filament (5),
- the first and second filaments (5) being arranged so that, for a given circumferential position of the tyre, in a first bead, the first filament (5) forms a radially outer connection (11), radially inside of which an internal connection (11) formed by the second filament is arranged, and, in the second bead, the second filament (5) forms a radially outer connection (11), radially inside of which an internal connection (11) formed by the first filament is arranged, **characterized in that** said connections (11) are provided with no contact between the filaments (5).

2. A tyre according to Claim 1, in which the respective paths of the first and second filaments (5) are arranged such that, between the crown and the bead, a group (10) of filaments (5) formed by a first and a second adjacent filament forms at least a portion of substantially parallel paths (16).

3. A tyre according to Claim 2, in which the portions of substantially parallel paths (16) represent at least substantially 25% of the total path of the filaments between the crown and the anchoring zone.

4. A tyre according to Claim 3, in which the portions of substantially parallel paths (16) represent between substantially 30% and 80% of the total path of the filaments between the crown and the anchoring zone.

5. A tyre according to one of Claims 1 or 2, in which the portions of substantially parallel paths (16) are provided in the sidewall, substantially radially externally to the anchoring zone.

6. A tyre according to one of Claims 1 or 2, in which the portions of substantially parallel paths (16) are provided substantially radially externally to the equator of each sidewall.

7. A tyre according to one of the preceding claims, comprising a third filament (5) forming on one hand, at the level of the crown and the sidewalls, a series of transverse portions extending substantially from one bead of the tyre to the other, and on the other hand, at the level of the beads, U-shaped connections (11) joining two successive transverse portions of the third filament.

8. A tyre according to Claim 7, in which the respective paths of the first, second and third filaments (5) are arranged such that, between the crown and the bead, a group of filaments formed by a first, a second and a third adjacent filament forms at least a portion of substantially parallel paths (16).

9. A tyre according to one of Claims 2 to 8, in which the portions of substantially parallel paths (16) follow substantially geodesic trajectories.

10. A tyre according to one of the preceding claims, in which the "forward" (14) and "return" (15) sections of at least two distinct groups cross to form a mesh pattern of filaments.

11. A tyre according to one of the preceding claims, in which at least one arrangement of filaments along a substantially circumferential path (16) is arranged substantially adjacent to said reinforcement structure at the level of the bead (4).

12. A tyre according to one of the preceding claims, in which said filaments (5) have substantially parallel paths in the upturn loop.

## Patentansprüche

1. Luftreifen (1), der mindestens eine Verstärkungsstruktur vom Karkassentyp, die auf jeder Seite des Luftreifens in einem Wulst (4) verankert ist, dessen Basis auf einen Felgensitz aufgezogen werden soll, und eine Scheitelbewehrung aufweist, wobei sich jeder Wulst (4) radial nach außen in einer Flanke (3) fortsetzt, die Flanken radial nach außen in einem Laufstreifen enden und die Verstärkungsstruktur aufweist:
- ein erstes Filament (5), das einerseits auf der Höhe des Scheitels und der Flanken (3) eine Reihe von transversalen Bereichen, die sich von einem Wulst (4) des Luftreifens zum anderen erstrecken, und andererseits auf der Höhe der Wülste Verbindungsstücke (11) in U-Form bildet, die zwei aufeinander folgende transversale Bereiche des ersten Filaments (5) miteinander verbinden,
- ein zweites Filament (5), das einerseits auf der Höhe des Scheitels und der Flanken (3) eine Reihe von transversalen Bereichen, die sich von einem Wulst (4) des Luftreifens zum anderen erstrecken, und andererseits auf der Höhe der Wülste Verbindungsstücke (11) in U-Form bildet, die zwei aufeinander folgende transversale Bereiche des zweiten Filaments (5) verbinden,
- wobei das erste Filament und das zweite Filament (5) so angeordnet sind, dass für eine gegebene Position des Luftreifens in Umfangsrichtung in einem ersten Wulst das erste Filament (5) ein radial äußeres Verbindungsstück (11) bildet, an dem radial innen ein durch das zweite Filament gebildetes inneres Verbindungsstück (11) angeordnet ist, und in dem zweiten Wulst das zweite Filament (5) ein radial äußeres Verbindungsstück (11) bildet, an dem radial innen ein durch das erste Filament gebildetes inneres Verbindungsstück (11) angeordnet ist, **dadurch gekennzeichnet, dass** die Verbindungsstücke (11) ohne Kontakt zwischen den Drähten (5) gebildet werden.

2. Luftreifen nach Anspruch 1, bei dem die Verläufe des ersten Filaments (5) und des zweiten Filaments (5) so angeordnet sind, dass zwischen dem Scheitel und dem Wulst eine Gruppe (10) von Filamenten (5), die aus einem ersten Filament und einem zweiten Filament, die benachbart sind, gebildet wird, mindestens ein Teilstück mit parallelen Verläufen (16) bildet.

3. Luftreifen nach Anspruch 2, wobei die Bereiche mit parallelen Verläufen (16) mindestens etwa 25 % des Gesamtverlaufs der Filamente zwischen dem Scheitel und der Verankerungszone ausmachen.

4. Luftreifen nach Anspruch 3, bei dem die Bereiche mit parallelen Verläufe (16) etwa 30 bis 80 % des Gesamtverlaufs der Filamente zwischen dem Scheitel und der Verankerungszone ausmachen.

5. Luftreifen nach einem der Ansprüche 1 oder 2, bei dem die Teilstücke mit parallelen Verläufen (16) in den Flanken in etwa radial außen an der Verankerungszone vorgesehen sind.

6. Luftreifen nach einem der Ansprüche 1 oder 2, bei dem die Teilstücke mit parallelen Verläufen in etwa radial außen am Äquator jeder Flanke angeordnet sind.

7. Luftreifen nach einem der vorhergehenden Ansprüche, der ein drittes Filament (5) aufweist, das einerseits auf der Höhe des Scheitels und der Flanke eine Reihe von transversalen Bereichen, die sich von einem Wulst des Luftreifens zum anderen erstrecken, und andererseits auf der Höhe der Wülste Verbindungsstücke (11) in U-Form bildet, die zwei aufeinander folgende transversale Bereiche des dritten Filaments miteinander verbinden.

8. Luftreifen nach Anspruch 7, bei dem die Verläufe des ersten, zweiten bzw. dritten Filaments so sind, dass zwischen dem Scheitel und dem Wulst eine Gruppe von Filamenten, die aus einem ersten, einem zweiten und einem dritten Filament, die benachbart sind, gebildet wird, zumindest ein Teilstück mit parallelen Verläufen (16) bildet.

9. Luftreifen nach einem der Ansprüche 2 bis 8, bei dem Teilstücke mit parallelen Verläufen (16) in etwa geodätischen Trajektorien folgen.

10. Luftreifen nach einem der vorhergehenden Ansprüche, bei dem die "hingeführten" Teilstücke (14) und die "zurückgeführten" Teilstücke (15) von mindestens zwei unterschiedlichen Gruppen sich zur Bildung eines Drahtgeflechts überkreuzen.

11. Luftreifen nach einem der vorhergehenden Ansprüche, bei dem mindestens eine Drahtanordnung, die einem Verlauf (16) in Umfangsrichtung folgt, auf der Höhe des Wulstes (4) angrenzend an eine Verstärkungsstruktur angebracht ist.

12. Luftreifen nach einem der vorhergehenden Ansprüche, bei dem die Drähte (5) in der Umkehrschlaufe parallel Verläufe aufweisen.
